# EUROPEAN PATENT SPECIFICATION

(11) **EP 3 499 217 B1**
(45) Date of publication and mention of the grant of the patent: **09.11.2022**
(21) Application number: 18207317.1
(22) Date of filing: 20.11.2018
(51) Int. Cl.: G01N 17/00, G01P 5/165, G01P 13/02

(54) **AIR DATA PROBE WITH A HEATER COIL PROTECTION ARRANGEMENT**
LUFTDATENSONDE MIT EINER HEIZSCHLANGENSCHUTZANORDNUNG
SONDE DE DONNÉES D'AIR AVEC UN AGENCEMENT DE PROTECTION POUR BOBINE DE CHAUFFAGE

(30) Priority: 15.12.2017 US 201715844067
(43) Date of publication of application: 19.06.2019
(73) Proprietor: ROSEMOUNT AEROSPACE INC., Burnsville, MN 55306-4898 (US)
(72) Inventor: GOLLY, Timothy Thomas, Lakeville, MN 55044 (US); JOHNSON, Paul Robert, Prior Lake, MN 55372 (US); SEIDEL, Greg, Farmington, MN 55024 (US)
(74) Representative: Dehns

(56) References cited:
- EP-A1- 3 076 185
- EP-A2- 3 073 275
- US-A- 2 254 155
- US-A- 2 399 370

## Description

### BACKGROUND

The present disclosure relates to air data probes and, in particular, to a corrosion resistant sleeve within a probe head for protecting heater coils and other internal components of the air data probe.

Air data probes operate in severe environments, which often cause corrosion within the air data probes due to exposure to atmospheric conditions. The most severe corrosion occurs at or near the hottest areas of the air data probes, typically along the inside and outside of the forward portion of the probe head. These areas experience higher operating temperatures than the remainder of the air data probe because the heat flux from a heater within the air data probe is heavily biased toward the probe head in order to provide the necessary anti-icing performance. The heater can include a hermetically sealed sheath, which surrounds the electrical wires of the heater. The hermetically sealed sheath is especially susceptible to corrosion due of its operating temperature and location within the probe, and also because atmospheric contaminants may be collected and concentrated around the heater sheath by internal probe features such as water dams or bulkheads. The heater sheath is a thin-walled tube and is therefore only able to sustain a limited amount of corrosion damage while maintaining a hermetically sealed environment and electrical insulation for the heater wires. Heater failure occurs rapidly after any breach of the heater sheath because the electrical insulation is severely degraded by any exposure to water or other environmental contaminants. The heater is not a repairable item and the entire air data probe must be replaced upon failure of the heater.

US 2254155 A discloses a Pitot-static tube for use on an aircraft.

US 2399370 A discloses an electrically heated Pitot tube.

### SUMMARY

In a first aspect of the present invention, an air data probe as claimed in claim 1 is provided.

The measurement equipment may be one or more absolute or differential pressure sensors.

The outer surface of the tip and an outer surface of the shell at the opening may be connected to one another with braze.

The bore within the tip may have an increasing cross-sectional area as the bore extends towards a forward end of the tip.

The air data probe may include braze between the sleeve and the shell.

The air data probe may include a strut connecting the shell to an aircraft.

The groove in the sleeve may be a spiral such that the wire coil of the heater is a bifilar coil extending within the groove.

The sleeve may be constructed from nickel.

In a second aspect of the present invention, a method of constructing an air data probe as claimed in claim 9 is provided.

The method may include fastening the shell to a strut configured to attach the air data probe to an aircraft.

The method may include installing measurement equipment adjacent the strut with the bore of the sleeve configured to allow atmospheric conditions to access the measurement equipment.

### BRIEF DESCRIPTION OF THE DRAWINGS

FIG. 1A is a cross-sectional side view of an exemplary air data probe which does not fall within the scope of the invention.
FIG. 1B is an enlarged cross-sectional view of a probe head of the air data probe.
FIG. 2 is an enlarged cross-sectional view of a probe head in accordance with the invention.

### DETAILED DESCRIPTION

In accordance with the present invention, an air data probe is disclosed as defined in independent claim 1. A corrosion resistant sleeve protects a heater and other components within the air data probe from corrosion resulting from contact with the environment, while still allowing atmospheric conditions (including pressure measured by pressure sensors) to reach measurement equipment within the air data probe. The corrosion resistant sleeve is positioned within a shell (collectively, the probe head) of the air data probe with the sleeve including at least one circumferentially extending groove to accommodate coils of a heater and a bore that allows atmospheric conditions, such as measured pressure, to reach the measurement equipment. The sleeve includes a tip integral with the sleeve and extending out from the shell such that an outer surface of the tip and an outer surface of the shell are adjacent one another and can be connected to one another with braze or by other means. The sleeve may also optionally include integral water dams, bulkheads, and may include a smooth internal bore or a bore conformal to the exterior groove to maximize internal volume. Further, the probe head can be connected to a strut, which in turn is connected to an aircraft with the air data probe providing information about the environment in which the aircraft is present.

The air data probe, including the corrosion resistant sleeve, can be constructed by installing the heater coil onto the sleeve, coating the heater coil and sleeve with a braze slurry, placing the heater coil and sleeve into the shell, liquefying the braze through the use of heat, and cooling the components so that the braze solidifies and seals the heater coil and sleeve within the shell. This method utilizes braze to seal and protect the internal components of the probe head (along with the sleeve), eliminating the need for welding or other machining/adhesion steps within the shell.

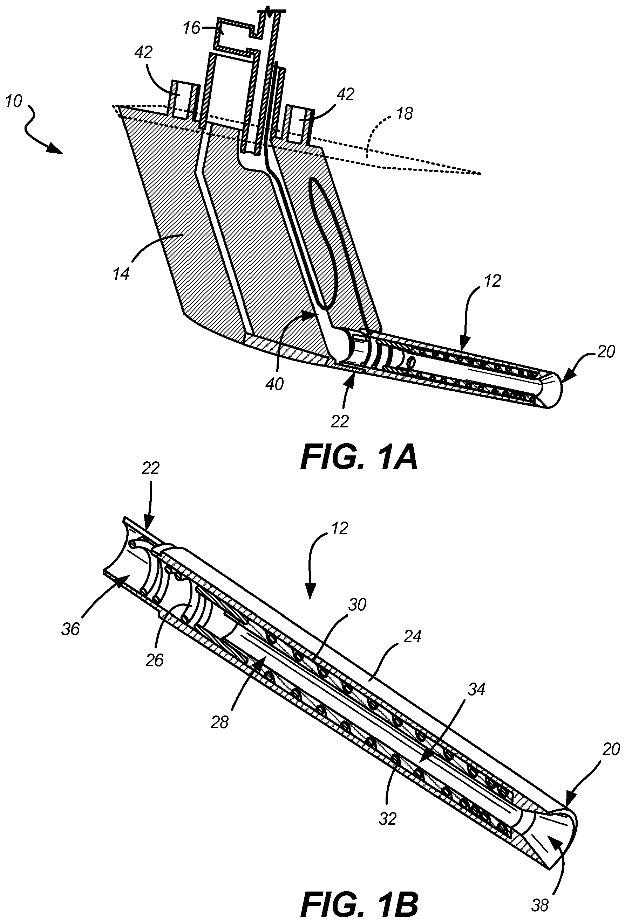

FIG. 1A is a cross-sectional side view of air data probe 10, while FIG. 1B is an enlarged cross-sectional view of probe head 12 of air data probe 10, in an example not in accordance with the present invention. Air data probe 10 includes probe head 12, strut 14, and measurement equipment 16, and is situated in or on aircraft 18. Probe head 12 includes first end 20, second end 22, shell 24, heater coils 26, sleeve 28, and braze 30. Sleeve 28 includes groove 32 and bore 34. Shell 24 includes axial cavity 36 extending between first end 20 and second end 22 and opening 38 adjacent first end 20. Strut 14 includes channel 40 and mounting holes 42 for fastening strut 14 to aircraft 18.

Air data probe 10 is connected to aircraft 18 and is configured to take measurements of the atmospheric conditions in which aircraft 18 is present. While air data probe 10 includes measurement equipment 16 configured to measure a variety of characteristics of the atmospheric conditions, measurement equipment 16 can be configured to measure atmospheric pressure through the use of one or more absolute and/or differential pressure sensors, which can be present within aircraft 18. Additionally, measurement equipment 16 can be a pitot pressure sensor configured to measure total pressure. Air data probe 10 includes probe head 12, which provides means through which atmospheric conditions can reach measurement equipment 16. Probe head 12 is connected to strut 14, which fastens probe head 12 to aircraft 18 through the use of mounting holes 42 and fasteners. Strut 14 also includes channel 40 extending from probe head 12 to measurement equipment 16 for allowing atmospheric conditions to reach measurement equipment 16. Strut 18 can also include a portion of heater coils 26 that provides heat to strut 18 and channel 40 to ensure ice does not form within channel 40 and atmospheric conditions can reach measurement equipment 16. Strut 18 can have a variety of shapes and sizes, or air data probe 10 can include a configuration in which strut 18 is not present and probe head 12 is connected directly to aircraft 18.

Probe head 12 has a hollow, substantially cylindrical shape that extends outward from strut 14. Probe head 12 has opening 38 at first end 20 and is fastened to strut 18 at second end 22. As mentioned above, probe head 12 provides an aperture through which the measured pressure and other atmospheric conditions can reach measurement equipment 16. Probe head 12 includes shell 24 on a radially outer surface, sleeve 28 radially within shell 24, and heater coils 26 substantially between shell 24 and sleeve 28 to ensure ice does not form in axial cavity 36 within shell 24. Heater coils 26 can be one or multiple wires, such as a bifilar coil, that provide heat to probe head 12.

Shell 24 includes axial cavity 36 extending between first end 20 and second end 22 and opening 38 to axial cavity 36 at first end 20. Shell 24 can be substantially cylindrical in shape. Shell 24 provides an outer surface of probe head 12 and protects the internal components of probe head 12 from the environment. Shell 24 can have other configurations, such as a frustoconical shape that is larger at second end 22 than at first end 20. As shown in FIGS. 1A and 1B, opening 38 of shell 24 is tapered such that opening 38 has an increasing cross-sectional area as opening 38 extends towards first end 20 with opening 38 having a cross-sectional area at an interface with axial cavity 36 that is less than a cross-sectional area of axial cavity 36. With this configuration, there is a smooth transition from opening 38 into axial cavity 36 because the thickness of sleeve 28 (within axial cavity 36) is the difference in cross-sectional area between axial cavity 36 and opening 38 at that interface (i.e., a diameter of opening 38 at this interface is similar to a diameter of bore 34 of sleeve 28). However, opening 38 can have another configuration, such as one that has a constant cross-sectional area that is the same or different from a cross-sectional area of axial cavity 36. Shell 24 can be made from a variety of materials suitable to handle the environmental conditions, such as nickel and/or other materials.

Sleeve 28 fits within shell 24 and is configured to protect heater coils 26 from corrosion due to contaminants of the atmospheric conditions. Sleeve 28 extends within axial cavity 36 of shell 24 and has groove 32 and bore 34. Sleeve 28 can be a hollow cylindrical shape (with bore 34 at a center) to correspond to axial cavity 36 of shell 24, and sleeve 28 can be configured to extend entirely from first end 20 to second end 22 or extend only for a portion of axial cavity 36. In the example of FIGS. 1A and 1B, sleeve 28 extends only from the interface between axial cavity 36 and opening 38 to a point near, but not at, second end 22.

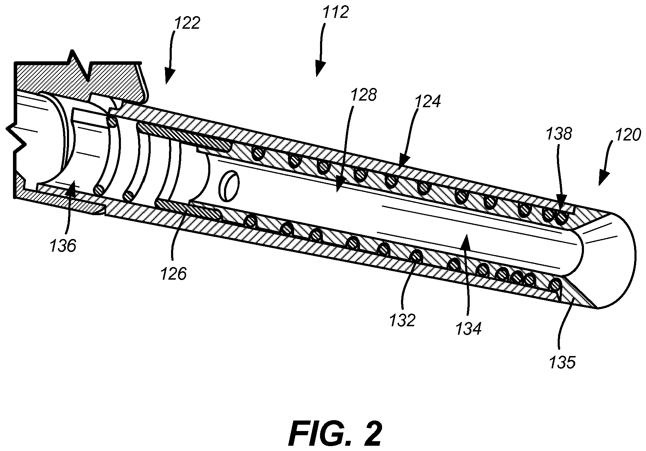

However, in accordance with the present invention and as will be described with regards to FIG. 2, embodiments of sleeve 28 include a tip integral with sleeve 28 such that the tip extends forward of opening 38 of shell 24. Sleeve 28 can be constructed from a variety of materials suitable for preventing corrosion of heater coils 26 and other components of probe head 12, such as nickel and/or other materials.

Groove 32 is located on a radially outside surface of sleeve 28, and extends at least partially circumferentially to accommodate heater coils 26. The sleeve 28 can include multiple axially-distributed grooves 32. In other instances, groove 32 can be a partially circumferentially-extending groove extending in a spiral configuration around sleeve 28 from first end 20 to second end 22. Groove 32 can have any cross-sectional shape configured to accommodate heater coils 26, and groove 32 can have any number of spirals or other features. However, groove 32 should not be so deep (i.e., extending into sleeve 28) that groove 32 extends entirely through sleeve 28. Sleeve 28 provides a protective barrier between heater coils 26 and deleterious contaminants within atmospheric that could otherwise cause corrosion.

Bore 34 can be at the center of sleeve 28 and extend along a length of sleeve 28. Bore 34 is configured to allow measured pressure (and other atmospheric conditions) to reach second end 22 of probe head 12 and eventually reach measurement equipment 16. Bore 34 can have a constant or varying cross-sectional area, but the cross-sectional area of bore 34 (and axial cavity 36 to contain sleeve 28) should be sized so as to allow measured pressure to reach measurement equipment 16 without becoming clogged or otherwise affecting the measured pressure prior to reaching measurement equipment 16. Bore 34 can be a smooth pathway or may be ridged corresponding to groove 32 (i.e., the thickness of sleeve 28 is constant such that bore 34 has ridges where groove 32 is in sleeve 28). Various water dams or bulkheads may optionally be integrated into sleeve 28.

As mentioned above, sleeve 28 within shell 24 protects heater coils 26 from corrosion due to contaminants within bore 34 and axial cavity 36. Heater coils 26 are sealed within axial cavity 36 of shell 24 by sleeve 28. Sleeve 28 and heater coils 26 can be sealed within axial cavity 36 through the use of braze 30, which is applied to heater coils 26 and sleeve 28 during the manufacture process. For example, to construct probe head 12 of air data probe 10, heater coils 26 are first wound into grooves 32 in sleeve 28. Then, heater coils 26 and sleeve 28 are coated in a slurry of braze 30, which can be in a fluid form by being at an elevated temperature. After being coated with the slurry of braze 30, heater coils 26 and sleeve 28 are inserted into axial cavity 36 in shell 24. During the insertion, a portion of the slurry of braze 30 may be scraped off. However, another portion of the slurry of braze 30 will still be present on heater coils 26 and sleeve 28 in an area between sleeve 28 and shell 24. With heater coils 26 and sleeve 28 within axial cavity 36 in shell 24, probe head 12 is then heated to at least partially liquefy the slurry of braze 30 such that the slurry can flow into gaps between heater coils 26, sleeve 28, and axial cavity 36. Finally, probe head 12 can be allowed to cool to solidify braze 30 (such that the slurry is now not a slurry but just solid braze 30) to seal heater coils 26 and sleeve 28 to shell 24 to prevent corrosion to heater coils 26. Once probe head 12 is constructed, probe head 12 can be fastened to strut 14, which is either already fastened to aircraft 18 adjacent measuring equipment 16 or then will be fastened to aircraft 18. If braze 30 is not utilized, heater coils 26 and sleeve 28 can be sealed within shell 24 by other means, such as by welding. If sleeve 28 includes a tip integral with sleeve 28 (as shown in FIG. 2), the method of constructing probe head 12 may additionally include fastening an outer surface of the tip to an outer surface of shell 24 using braze or another material/method, such as welding.

FIG. 2 is an enlarged cross-sectional view of the probe head 112 in accordance with the invention. Probe head 112 includes first end 120, second end 122, shell 124, heater coils 126, and sleeve 128. Sleeve 128 includes groove 132, bore 134, and tip 135, while shell 124 includes axial cavity 136 and opening 138. The air data probe of which probe head 112 is a component of is similar to air data probe 10 in FIG. 1A, and the components of probe head 112 are similar to those of probe head 12 in FIGS. 1A and 1B except that opening 138 is an extension of axial cavity 136. Further, sleeve 128 includes tip 135 that can be integral with sleeve 128.

Shell 124 of probe head 112 includes axial cavity 136, which can have a constant cross-sectional area, and opening 138 at first end 20. Different than shell 24 of probe head 12, opening 138 is configured to not be a forward-most point of probe head 112. Rather, tip 135 of sleeve 128 is the forward-most point of probe head 112.

Tip 135, as shown in FIG. 2, is integral with sleeve 128 such that sleeve 128 and tip 135 form one continuous piece. Tip 135 is at first end 120, and bore 134 of sleeve 128 extends through tip 135 such that bore 134 extends entirely through sleeve 128 to allow measured pressure to reach the measurement equipment. Bore 134 within tip 135 can have a cross-sectional area that is the same as bore 134 within sleeve 128 or, as shown in FIG. 2, bore 134 within tip 135 can have an increasing cross-sectional area as bore 134 extends within tip 135 towards first end 120. Tip 135 has an outer diameter of an outer surface that is constant or tapered and the same as an outer diameter of an outer surface of shell 124 so that an interface between the outer surface of tip 135 and the outer surface of shell 124 is smooth. Tip 135 can be fastened to shell 124 using a variety of materials, such as welding or braze. The connection between tip 135 and shell 124 should be such that contaminants in the atmospheric conditions are prevented from entering a gap between shell 124 and sleeve 128, thereby preventing corrosion of heater coils 126. With sleeve 128 including tip 135, the connection between tip 135 and shell 124 can be easily viewed and inspected by assembly or inspection personnel to determine if the quality of the braze joint is sufficient to prevent contaminants (such as water and/or other fluids) from infiltrating the gap between shell 124 and sleeve 128.

The air data probe 10 therefore includes a sleeve 128 which is configured within axial cavity 136 of shell 124 to prevent corrosion to heater coils 126 and other components of probe head 112. With heater coils 126 being sealed between shell 124 and sleeve 128 by sleeve 128 and optionally with braze 30 or another material, corrosive fluids/contaminants from the atmosphere cannot contact and damage heater coils 126, increasing the life cycle of air data probe 10.

It is intended that the invention not be limited to the particular embodiment(s) disclosed, but that the invention will include all embodiments falling within the scope of the appended claims.

## Claims

1. An air data probe (10) comprising:
a sleeve (128) having a first end (120) and a second end (122), the sleeve (128) including a circumferentially extending groove (132) on an outside surface and a bore (134) extending along a center of the sleeve between the first end (120) and the second end (122);
a heater having a wire coil (126) within the groove (132) of the sleeve (128);
measurement equipment (16) configured to measure atmospheric conditions provided to the measurement equipment (16) through the bore (134) in the sleeve (128);
a shell (124) outward from the sleeve (128) and the heater coil (126) with the shell (124) having an opening (138) adjacent to the bore (134) at the first end (120) of the sleeve (128),
wherein the sleeve (128) prevents corrosive elements from coming into contact with the heater coils (126); and
a tip (135) integral with the sleeve (128), the tip (135) being adjacent to the first end (120) of the sleeve (128) and the opening (138) of the shell (124);
wherein the tip (135) extends forward of the opening (138) of the shell (124) such that an outer surface of the tip (135) is in contact with atmospheric conditions; and
wherein the tip (135) has an outer diameter of an outer surface that is equal to an outer diameter of an outer surface of the shell (124).

2. The air data probe (10) of claim 1, wherein the measurement equipment (16) is one or more absolute or differential pressure sensors.

3. The air data probe (10) of claim 1 or 2, wherein the outer surface of the tip (135) and an outer surface of the shell (124) at the opening (138) are connected to one another with braze.

4. The air data probe (10) of claim 1, 2 or 3, wherein the bore (134) within the tip (135) has an increasing cross-sectional area as the bore (134) extends towards a forward end of the tip (135).

5. The air data probe (10) of any of claims 1 to 4, further comprising:
braze between the sleeve (128) and the shell (124).

6. The air data probe (10) of any of claims 1 to 5, further comprising:
a strut (14) connecting the shell (124) to an aircraft (18).

7. The air data probe (10) of any of claims 1 to 6, wherein the groove (132) in the sleeve (128) is a spiral such that the wire coil (126) of the heater is a bifilar coil extending within the groove (132).

8. The air data probe (10) of any of claims 1 to 7, wherein the sleeve (128) is constructed from nickel.

9. A method of constructing an air data probe (10) comprising:
winding a heater coil (126) onto a sleeve (128), the sleeve (128) including a circumferential groove (132) to accommodate the heater coil (126) and a bore (134) extending between a forward end (120) and a rear end (122);
coating the heater coil (126), the sleeve (128), and a tip (135) in a braze slurry with the tip (135) being integral with the sleeve (128), the tip (135) being adjacent to the first end (120) of the sleeve (128);
inserting the heater coil (126) and sleeve (128) into a shell (124) such that the tip (135) is adjacent an opening (138) of the shell (124);
heating the heater coil (126), sleeve (128), shell (124), and braze slurry to liquefy the braze slurry; and
cooling the heater coil (126), sleeve (128), shell (124), and braze slurry to allow the braze slurry to solidify to seal the heater coil (126) and sleeve (128) within the shell (124) to prevent corrosion of the heater coil (126);
wherein the tip (135) extends forward of the opening (138) of the shell (124) such that an outer surface of the tip (135) is in contact with atmospheric conditions; and
wherein the tip (135) has an outer diameter of an outer surface that is equal to an outer diameter of an outer surface of the shell (124).

10. The method of claim 9, further comprising;
fastening the shell (124) to a strut (14) configured to attach the air data probe (10) to an aircraft (18).

11. The method of claim 10, further comprising:
installing measurement equipment (16) adjacent the strut (14) with the bore (134) of the sleeve (128) configured to allow atmospheric conditions to access the measurement equipment (16).

## Patentansprüche

1. Luftdatensonde (10), umfassend:
eine Hülse (128) mit einem ersten Ende (120) und einem zweiten Ende (122), wobei die Hülse (128) eine sich umlaufend erstreckende Nut (132) auf einer Außenfläche und eine sich entlang einer Mitte der Hülse zwischen dem ersten Ende (120) und dem zweiten Ende (122) erstreckende Bohrung (134) enthält;
eine Heizvorrichtung mit einer Drahtschlange (126) innerhalb der Nut (132) der Hülse (128);
Messausrüstung (16), die konfiguriert ist, atmosphärische Bedingungen, die der Messausrüstung (16) durch die Bohrung (134) in der Hülse (128) bereitgestellt werden, zu messen;
einen von der Hülse (128) und der Heizschlange (126) aus äußeren Mantel (124), wobei der Mantel (124) eine der Bohrung (134) am ersten Ende (120) der Hülse (128) benachbarte Öffnung (138) aufweist,
wobei die Hülse (128) verhindert, dass korrosive Elemente mit den Heizschlangen (126) in Kontakt kommen; und
eine mit der Hülse (128) einstückige Spitze (135), wobei die Spitze (135) dem ersten Ende (120) der Hülse (128) und der Öffnung (138) der des Mantels (124) benachbart ist;
wobei sich die Spitze (135) von der Öffnung (138) des Mantels (124) nach vorn erstreckt, sodass eine Außenfläche der Spitze (135) in Kontakt mit atmosphärischen Bedingungen ist; und
wobei die Spitze (135) einen Außendurchmesser einer Außenfläche aufweist, der gleich einem Außendurchmesser einer Außenfläche des Mantels (124) ist.

2. Luftdatensonde (10) nach Anspruch 1, wobei die Messausrüstung (16) ein oder mehrere Absolut- oder Differenzdrucksensoren ist.

3. Luftdatensonde (10) nach Anspruch 1 oder 2, wobei die Außenfläche der Spitze (135) und eine Außenfläche des Mantels (124) an der Öffnung (138) durch Löten miteinander verbunden sind.

4. Luftdatensonde (10) nach Anspruch 1, 2 oder 3, wobei die Bohrung (134) innerhalb der Spitze (135) eine zunehmende Querschnittsfläche aufweist, wenn sich die Bohrung (134) in Richtung eines vorderen Endes der Spitze (135) erstreckt.

5. Luftdatensonde (10) nach einem der Ansprüche 1 bis 4, ferner umfassend:
Löten zwischen der Hülse (128) und dem Mantel (124).

6. Luftdatensonde (10) nach einem der Ansprüche 1 bis 5, ferner umfassend:
eine Strebe (14), die den Mantel (124) mit einem Flugzeug (18) verbindet.

7. Luftdatensonde (10) nach einem der Ansprüche 1 bis 6, wobei die Nut (132) in der Hülse (128) eine Spirale ist, sodass die Drahtschlange (126) der Heizvorrichtung eine bifilare Schlange ist, die sich innerhalb der Nut (132) erstreckt.

8. Luftdatensonde (10) nach einem der Ansprüche 1 bis 7, wobei die Hülse (128) aus Nickel konstruiert ist.

9. Verfahren zum Konstruieren einer Luftdatensonde (10), umfassend:
Wickeln einer Heizschlange (126) auf eine Hülse (128), wobei die Hülse (128) eine Umfangsnut (132) zur Aufnahme der Heizschlange (126) und eine Bohrung (134), die sich zwischen einem vorderen Ende (120) und einem hinteren Ende (122) erstreckt, aufweist;
Beschichten der Heizschlange (126), der Hülse (128) und einer Spitze (135) in einer Lötsuspension, wobei die Spitze (135) einstückig mit der Hülse (128) ist und die Spitze (135) dem ersten Ende (120) der Hülse (128) benachbart ist;
Einsetzen der Heizschlange (126) und der Hülse (128) in einen Mantel (124), sodass die Spitze (135) einer Öffnung (138) des Mantels (124) benachbart ist;
Erhitzen der Heizschlange (126), der Hülse (128), des Mantels (124) und der Lötsuspension, um die Lötsuspension zu verflüssigen; und
Kühlen der Heizschlange (126), der Hülse (128), des Mantels (124) und der Lötsuspension, damit sich die Lötsuspension verfestigen kann, um die Heizschlange (126) und die Hülse (128) innerhalb des Mantels (124) abzudichten, um Korrosion der Heizschlange (126) zu verhindern;
wobei sich die Spitze (135) von der Öffnung (138) des Mantels (124) nach vorn erstreckt, sodass eine Außenfläche der Spitze (135) in Kontakt mit atmosphärischen Bedingungen ist; und
wobei die Spitze (135) einen Außendurchmesser einer Außenfläche aufweist, der gleich einem Außendurchmesser einer Außenfläche des Mantels (124) ist.

10. Verfahren nach Anspruch 9, ferner umfassend:
Befestigen des Mantels (124) an einer Strebe (14), die konfiguriert ist, die Luftdatensonde (10) an einem Flugzeug (18) zu befestigen.

11. Verfahren nach Anspruch 10, ferner umfassend:
Installieren von Messausrüstung (16) angrenzend an die Strebe (14), wobei die Bohrung (134) der Hülse (128) konfiguriert ist, atmosphärischen Bedingungen Zugang zur Messausrüstung (16) zu ermöglichen.

## Revendications

1. Sonde de données d'air (10) comprenant :
un manchon (128) ayant une première extrémité (120) et une seconde extrémité (122), le manchon (128) comportant une rainure (132) s'étendant circonférentiellement sur une surface extérieure et un alésage (134) s'étendant le long d'un centre du manchon entre la première extrémité (120) et la seconde extrémité (122) ;
un élément chauffant ayant une bobine de fil (126) à l'intérieur de la rainure (132) du manchon (128) ;
un équipement de mesure (16) conçu pour mesurer les conditions atmosphériques fournies à l'équipement de mesure (16) à travers l'alésage (134) dans le manchon (128) ;
une coque (124) vers l'extérieur depuis le manchon (128) et la bobine de chauffage (126), la coque (124) ayant une ouverture (138) adjacente à l'alésage (134) au niveau de la première extrémité (120) du manchon (128),
dans laquelle le manchon (128) empêche des éléments corrosifs d'entrer en contact avec les bobines de chauffage (126) ; et
une pointe (135) solidaire du manchon (128), la pointe (135) étant adjacente à la première extrémité (120) du manchon (128) et à l'ouverture (138) de la coque (124) ;
dans laquelle la pointe (135) s'étend vers l'avant de l'ouverture (138) de la coque (124) de sorte qu'une surface extérieure de la pointe (135) est en contact avec les conditions atmosphériques ; et
dans laquelle la pointe (135) a un diamètre extérieur d'une surface extérieure qui est égal à un diamètre extérieur d'une surface extérieure de la coque (124).

2. Sonde de données d'air (10) selon la revendication 1, dans laquelle l'équipement de mesure (16) est un ou plusieurs capteurs de pression absolue ou différentielle.

3. Sonde de données d'air (10) selon la revendication 1 ou 2, dans laquelle la surface extérieure de la pointe (135) et une surface extérieure de la coque (124) au niveau de l'ouverture (138) sont reliées l'une à l'autre par brasage.

4. Sonde de données d'air (10) selon la revendication 1, 2 ou 3, dans laquelle l'alésage (134) à l'intérieur de la pointe (135) a une section transversale croissante à mesure que l'alésage (134) s'étend vers une extrémité avant de la pointe (135) .

5. Sonde de données d'air (10) selon l'une quelconque des revendications 1 à 4, comprenant en outre :
le brasage entre le manchon (128) et la coque (124).

6. Sonde de données d'air (10) selon l'une quelconque des revendications 1 à 5, comprenant en outre :
une entretoise (14) reliant la coque (124) à un aéronef (18).

7. Sonde de données d'air (10) selon l'une quelconque des revendications 1 à 6, dans laquelle la rainure (132) dans le manchon (128) est une spirale de sorte que la bobine de fil (126) de l'élément chauffant est une bobine bifilaire s'étendant à l'intérieur de la rainure (132).

8. Sonde de données d'air (10) selon l'une quelconque des revendications 1 à 7, dans laquelle le manchon (128) est construit à partir de nickel.

9. Procédé de construction d'une sonde de données d'air (10) comprenant :
l'enroulement d'une bobine de chauffage (126) sur un manchon (128), le manchon (128) comportant une rainure circonférentielle (132) pour loger la bobine de chauffage (126) et un alésage (134) s'étendant entre une extrémité avant (120) et une extrémité arrière (122) ;
le revêtement de la bobine de chauffage (126), du manchon (128) et d'une pointe (135) dans une suspension de brasage, la pointe (135) étant solidaire du manchon (128), la pointe (135) étant adjacente à la première extrémité (120) du manchon (128) ; l'insertion de la bobine de chauffage (126) et du manchon (128) dans une coque (124) de sorte que la pointe (135) est adjacente à une ouverture (138) de la coque (124) ;
le chauffage de la bobine de chauffage (126), du manchon (128), de la coque (124) et de la suspension de brasage pour liquéfier la suspension de brasage ; et
le refroidissement de la bobine de chauffage (126), du manchon (128), de la coque (124) et de la suspension de brasage pour permettre à la suspension de brasage de se solidifier afin de sceller la bobine de chauffage (126) et le manchon (128) à l'intérieur de la coque (124) pour empêcher la corrosion de la bobine de chauffage (126) ;
dans lequel la pointe (135) s'étend vers l'avant de l'ouverture (138) de la coque (124) de sorte qu'une surface extérieure de la pointe (135) est en contact avec les conditions atmosphériques ; et
dans lequel la pointe (135) a un diamètre extérieur d'une surface extérieure qui est égal à un diamètre extérieur d'une surface extérieure de la coque (124).

10. Procédé selon la revendication 9, comprenant en outre ;
la fixation de la coque (124) à une entretoise (14) conçue pour fixer la sonde de données d'air (10) à un aéronef (18).

11. Procédé selon la revendication 10, comprenant en outre :
l'installation d'un équipement de mesure (16) adjacent à l'entretoise (14) avec l'alésage (134) du manchon (128) conçu pour permettre aux conditions atmosphériques d'accéder à l'équipement de mesure (16).
